# EUROPEAN PATENT APPLICATION

(11) **EP 0 706 075 A1**
(43) Date of publication of application: **10.04.1996**
(21) Application number: 95306982.0
(22) Date of filing: 03.10.1995
(51) Int. Cl.: G02F 1/141

(54) **Liquid crystal display element and device**

(30) Priority: 03.10.1994 GB 9419900
(71) Applicant: SHARP KABUSHIKI KAISHA, Osaka 545 (JP)
(72) Inventor: Raynes, Edward Peter, Oxford, OX1 4LQ (GB); Bonnet, Paul, Oxford, OX4 4XX (GB)
(74) Representative: Robinson, John Stuart

(57) **Abstract**

A liquid crystal display element (10a, b, c, 30a, b, c, 56) comprises first and second electrodes (18, 20, 36, 38) and a bistable ferroelectric liquid crystal material (22, 44) therebetween. The display element (10a, b, c, 30a, b, c, 56) defines a plurality of sub-elements (24a, b, c, 46a, b, c, 50, 52, 54), the liquid crystal material (22, 44) of each of which is switchable between its stable states upon the application of a voltage exceeding a predetermined level to the first and second electrodes (18, 20, 36, 38). The liquid crystal material (22, 44) has a minimum in its response time - voltage characteristic. In one embodiment, the liquid crystal material (22) is of stepped thickness so that the sub-elements (24a, b,c) have different liquid crystal layer thicknesses.

## Description

This invention relates to a liquid crystal display element and to a device including a plurality of such elements. In particular, the invention relates to a liquid crystal display element capable of displaying a plurality of grey levels and a device including such display elements.

Where liquid crystal display elements are used in large display panels, it is desirable to be able to produce a large number of grey levels in order to improve the quality or versatility of the display. Since liquid crystal display elements are bistable devices and are generally in one of their stable states (referred to hereinafter as their on- and off-states), the production of a large number of grey levels in a display panel is difficult. One technique for producing more than two grey levels using liquid crystal display elements is to split each element of the display panel into a plurality of sub-units of different liquid crystal layer thickness. The variations in the thickness of the liquid crystal layer result in the sub-units being switchable between their on- and off-states upon the application of different voltages to the element. If a relatively low voltage is applied, only one of the sub-units may be switched, a higher voltage resulting in the switching of several of the sub-units. The proportion of the element in a particular state is therefore controllable. When forming part of a display panel, the individual sub-units are not clearly visible, and the elements of the display panel appear to be of variable grey level. It has been found that such elements are difficult to control as, in order to control each sub-unit, the applied voltage must be accurately controlled. Such a technique is disclosed in United States Patent 4712877.

According to the present invention there is provided a liquid crystal display element comprising first and second electrodes and a ferroelectric liquid crystal material disposed therebetween, characterised in that the liquid crystal material has a minimum in the response time - voltage characteristic thereof and in that the display element comprises a plurality of sub-elements having different switching thresholds.

Liquid crystal materials displaying a minimum in their response time - voltage characteristic, for instance as disclosed in W094/12591, generally have a low spontaneous polarization. The lower spontaneous polarization results in the liquid crystal material having a relatively high response time at a particular voltage. However, the minimum in the response time - voltage characteristic can be utilized by using certain drive techniques, for example the JOERS/Alvey technique or one of the Malvern techniques. These drive techniques apply a well defined voltage to the electrodes. The minimum in the response time - voltage characteristic allows a very high level of discrimination between switching and non-switching pulses to be achieved, this level of discrimination not being possible where materials not displaying a minimum in their response time - voltage characteristic are used. It will therefore be recognised that the sub-elements of the liquid crystal display element may be controlled accurately resulting in a display element having a plurality of accurately controllable grey levels.

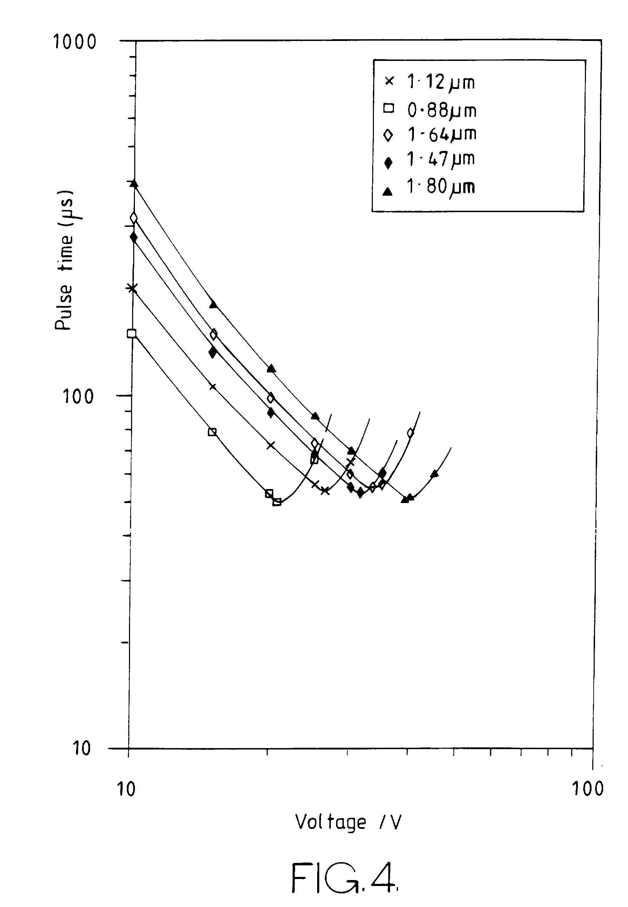

Preferably one of the electrodes is of stepped form varying the separation of the electrodes, the liquid crystal material substantially filling the space between the electrodes. It has been found that the magnitude of the voltage required to switch the liquid crystal material between its stable states is dependent upon the thickness of the material. It will be recognised that the provision of such a stepped electrode varies the thickness of the liquid crystal material, hence providing the display element with a plurality of sub-elements each of which is switchable between its stable states upon the application of a voltage the magnitude of which exceeds a predetermined level. Advantageously the voltage applied for switching a given pixel is constrained to lie between upper and lower limits. It is apparent from inspection of Figure 4 of the accompanying drawings that the use of too low or too high a control voltage will not switch the liquid crystal material between its stable states.

Alternatively, the electrodes may be substantially planar and a dielectric material of varying thickness may be provided between at least one of the electrodes and the liquid crystal material. The provision of the dielectric material reduces the effective electric field applied to the liquid crystal material. Since the dielectric material is of varying thickness, the display element includes a plurality of sub-elements each of which is switchable on the application of a different voltage to the electrodes. A filler material may be provided on regions of the dielectric so as to define a space of substantially uniform thickness for the liquid crystal material.

As a further alternative, different dielectric materials may be used at different places so as to define the sub-elements. Dielectric materials may also be used in conjunction with the stepped electrodes to define a liquid crystal layer of uniform thickness.

The invention will further be described, by way of example, with reference to the accompanying drawings, in which:
Figure 1 is a cross sectional view of a display device according to a first embodiment;
Figures 2 and 3 are views similar to Figure 1 of second and third embodiments;
Figure 4 is a graph showing the variations in the response time - voltage (τ-V) characteristic for different thicknesses of liquid crystal material; and
Figure 5 is a cross-sectional view of a fourth embodiment of the present invention.

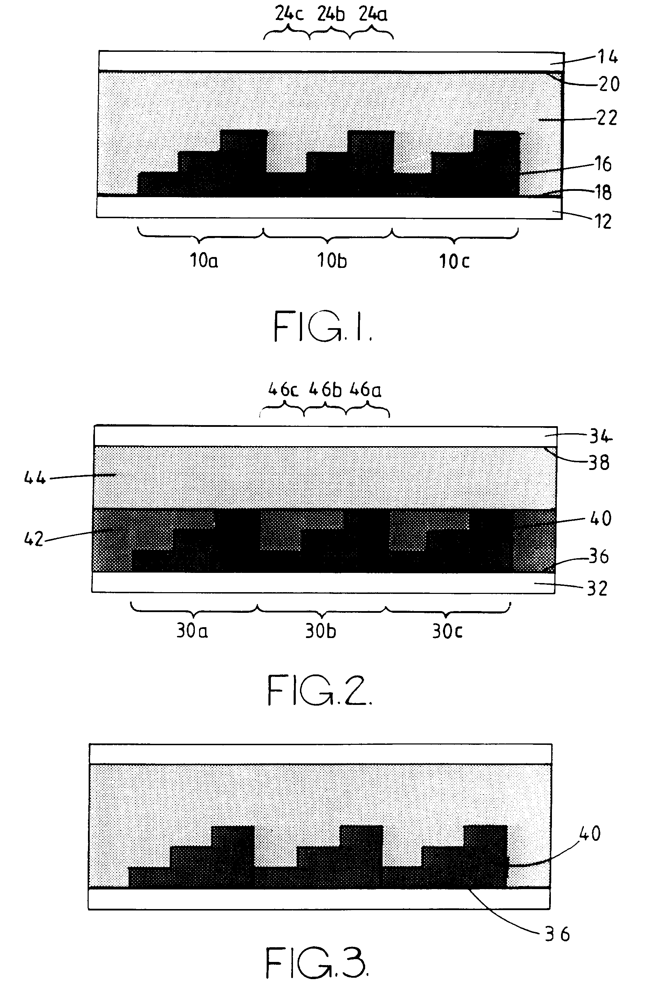

The display device illustrated in Figure 1 includes three display elements 10a, 10b, 10c, the device comprising a pair of glass plates 12, 14 spaced apart from one another. A filler material 16 is provided on the upper surface of the lower glass plate 12, the filler material 16 being of stepped form. A first electrode 18 is provided on the upper surface of the filler material 16, a second electrode 20 being provided on the lower surface of the upper glass plate 14. The space between the first and second electrodes 18, 20 is filled with a liquid crystal material 22 displaying a minimum in its τ-V characteristic. One example of such a material is SCE8 available from Merck and Company which has been heated into the nematic phase and allowed to cool slowly to the ferroelectric phase.

The filler 16 may be electrically conducting, for example, solid indium tin oxide. Thus the filler and first electrode can effectively be combined.

The provision of the filler material 16 of stepped thickness results in the liquid crystal material 22 being of stepped thickness and defines a first sub-element 24a of relatively thin liquid crystal thickness, a second sub-element 24b, and a third sub-element 24c of relatively thick liquid crystal layer thickness. As shown in Figure 4, for a given pulse time, the applied voltage necessary to switch the liquid crystal material between its on- and off-states varies with the thickness of the liquid crystal material layer, the third sub-element 24c of relatively large liquid crystal layer thickness requiring a higher applied voltage in order to change state than the first and second sub-elements 24a, 24b.

It will be understood therefore that, if one of the display elements of the device shown in Figure 1 were in a state in which all three of its sub-elements were in the off-state, the application of a voltage below a first predetermined level would not have any effect upon the device, whereas the application of a voltage exceeding a second, higher, predetermined level would switch the first sub-element 24a to its on-state, the second and third sub-elements 24b, 24c remaining in their off-state. The application of a voltage exceeding a third predetermined voltage higher than the second predetermined voltage would switch both the first and second sub-elements 24a, 24b to their on-states, and the application of a voltage exceeding a fourth predetermined voltage would switch all three sub-elements 24a, 24b, 24c to their on-states.

In order to return each sub-element to its off-state, a voltage of the appropriate magnitude but of the opposite polarity must be applied to the element.

Such a display element has the ability to display four grey levels rather than the two levels which are available conventionally, the four levels being (a) all three sub-elements off, (b) two sub-elements off, one sub-element on, (c) one sub-element off, two sub-elements on, and (d) all three sub-elements on. By using a device including the above described display element capable of producing four grey levels in a panel using digital spatial and temporal grey level schemes capable of producing up to 64 grey levels, the total number of available grey levels would be 256.

In order to drive the device, modified versions of the JOERS/Alvey drive technique or one of the Malvern techniques may be used, these drive techniques being described in "The JOERS/Alvey Ferroelectric Multiplexing Scheme" (Ferroelectrics, 1991, Vol 122, pages 63-79) and "A New Set of High Speed Matrix Addressing Schemes for Ferroelectric Liquid Crystal Displays" (Liquid Crystals, 1993, Vol 13, No 4, pages 597-601). These drive techniques each apply well defined voltages to the electrodes accurately controlling the state of each of the sub-elements of the device.

The display device illustrated in Figure 2 also includes three display elements 30a, 30b, 30c. The device comprises a pair of glass panels 32, 34 each provided with an electrode 36, 38. The upper surface of the lower electrode 36 is provided with a layer of dielectric material 40 of stepped thickness. A filler material 42 is provided on the dielectric material 40 to provide the stepped dielectric material 40 with a smooth upper surface. The remaining space between the electrodes 36, 38 is filled with a ferroelectric liquid crystal material 44, for example of the type mentioned above. The provision of the filler material 42 renders the liquid crystal layer of uniform thickness.

This display device has the advantage that the liquid crystal layer is of uniform thickness. The liquid crystal layer thickness may therefore be selected to achieve the optimum performance of the liquid crystal layer.

The dielectric material 40 of stepped thickness varies the effective electric field applied to the liquid crystal material 44; the thicker the dielectric material 40, the higher the voltage which must be applied to effect switching of the liquid crystal material 44 (subject to the constraint that the voltage must not be too great). It will therefore be recognised that the provision of the stepped dielectric material 40 has the effect of dividing each display element 30a, 30b, 30c into three sub-elements 46a, 46b, 46c each being switched upon the application of a different voltage to the electrodes 36, 38, a higher voltage being required to switch the sub-unit 46a adjacent a thick dielectric layer 40 than is necessary to switch the sub-units 46b, 46c adjacent a thinner dielectric layer.

The device may be controlled using modifications of the JOERS/Alvey technique or one of the Malvern techniques mentioned above in order to achieve an accurately controllable device capable of producing four grey levels. By using the device in a display panel using a spatial and temporal grey level scheme, the total number of grey levels can be increased as mentioned above. Other drive schemes are described in British Patent Applications Nos. 9419898.3, 9419899.1 and 9419897.5.

In both of the described devices, the liquid crystal display elements are capable of producing four grey levels. By increasing the number of steps in the liquid crystal layer thickness or in the thickness of the dielectric material, the total number of available grey levels may be increased. It will be recognised that, when the number of grey levels is increased, the separation of the predetermined voltages at which switching occurs is reduced and a point may be reached beyond which the sub-units cannot be accurately controlled.

A further embodiment comprises a combination of the first and second embodiments, the further embodiment including both a stepped liquid crystal layer thickness and a stepped dielectric material. As illustrated in Figure 3, the display device of the third embodiment is similar to that of the second embodiment but with the omission of the filler material, the liquid crystal material filling the space occupied by the filler material on the second embodiment. Operation of this device is similar to that of the first and second embodiments and so will not be described further.

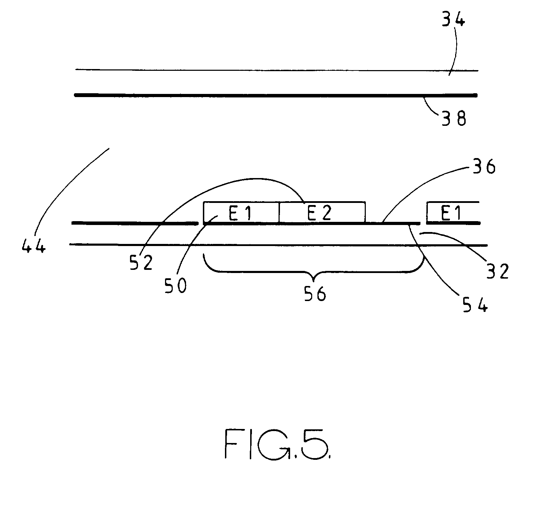

In a further embodiment, shown in Figure 5, different regions 50 and 52 of the device have different dielectric materials E1 and E2, respectively. The materials E1 and E2 may be of the same thickness. The regions 50 and 52 co-operate with a further region 54 which does not have dielectric formed thereon, to form a display element 56. Each of the regions 50, 52 and 54 has a different electric field gradient therein for a given potential difference between the electrodes 36 and 38. Consequently the display element 56 can take any one of four states. The region 54 may be formed as a stepped electrode of equal height to the dielectric materials E1 and E2 so as to keep the liquid crystal layer 44 at a constant thickness. For a display having only three grey levels, a single block of dielectric may be used in conjunction with a dielectric-free region 54 or two blocks of dielectric may be used without the dielectric free region 54.

## Claims

1. A liquid crystal display element comprising first and second electrodes (18, 20, 36, 38) and a ferroelectric liquid crystal material (22, 44) disposed therebetween, characterised in that the liquid crystal material (22, 44) has a minimum in the response time - voltage characteristic thereof and in that the display element (10a, b, c, 30a, b, c, 56) comprises a plurality of sub-elements (24a, b, c, 46a, b, c, 50, 52, 54) having different switching thresholds.

2. A liquid crystal display element as claimed in Claim 1, characterised in that the sub-elements (24a, b, c, 46a, b, c, 50, 52, 54) are arranged to apply a spatially varying electric field across the liquid crystal material (22, 44) when a voltage difference is applied across the first and second electrodes (18, 20, 36, 38).

3. A liquid crystal display element as claimed in Claim 1 or Claim 2, characterised in that the liquid crystal material (22, 44) is of varying thickness.

4. A liquid crystal display element as claimed in any one of the preceding claims, characterised in that the separation of the electrodes (18, 20, 36, 38) is of varying thickness.

5. A liquid crystal display element as claimed in Claim 4 when dependent upon Claim 3, characterised in that one of the electrodes (18) is of stepped form for varying the separation of the electrodes (18, 20), the liquid crystal material (22) substantially filling the space between the electrodes (18, 20).

6. A liquid crystal display element as claimed in Claim 1 or Claim 2, characterised in that a dielectric material (40) of varying thickness is provided between at least one of the electrodes (18, 36) and the liquid crystal material (44).

7. A liquid crystal display element as claimed in Claim 6, characterised in that the electrodes (36, 38) are substantially planar and the liquid crystal material (44) is of substantially uniform thickness, the dielectric material (40) of varying thickness being provided between one of the electrodes (36) and the liquid crystal material (44).

8. A liquid crystal display element as claimed in Claim 6 or Claim 7, characterised in that the dielectric material (40) is of stepped thickness.

9. A liquid crystal display element as claimed in Claim 1 or 2, characterised by at least two regions (50, 52) containing first and second dielectric materials (E1, E2) having different permittivities.

10. A liquid crystal display element as claimed in Claim 9, characterised in that the first and second dielectric materials (E1, E2) have the same thickness.

11. A liquid crystal display element as claimed in Claim 9 or 10, characterised by a stepped electrode.

12. A liquid crystal display element as claimed in Claim 1 or 2, characterised by at least one element of dielectric material and an electrode having a stepped region.

13. A liquid crystal display device comprising a plurality of display elements of the type claimed in any one of the preceding claims.
